# EUROPÄISCHE PATENTANMELDUNG

(11) **EP 4 835 143 A1**
(43) Veröffentlichungstag der Anmeldung: **04.11.2026**
(21) Anmeldenummer: 25173508.0
(22) Anmeldetag: 30.04.2025
(51) Int. Cl.: C25B 1/042, C25B 9/67, C25B 9/70, C25B 15/021

(54) **ELEKTROLYSESYSTEM**

(71) Anmelder: Sunfire SE, 01237 Dresden (DE)
(72) Erfinder: Städel, Christian, 01189 Dresden (DE); Rocha Faria Meisel, Peter, 01109 D (DE); Paul, Raphael, 01277 Dresden (DE)
(74) Vertreter: Epping - Hermann - Fischer

(57) **Zusammenfassung**

Ein Elektrolysesystem weist auf:
- einen Träger (210), der an einer Koppelseite (211) einen Mittenbereich (212) und einen Randbereich (213) aufweist, der den Mittenbereich (212) umgibt,
- eine Mehrzahl von Elektrolysezellenanordnungen (250), die in dem Randbereich (213) angeordnet sind,
- eine Heizanordnung (100), wobei die Heizanordnung (100) in dem Mittenbereich (212) angeordnet ist, sodass die Elektrolysezellenanordnungen (250) um die Heizanordnung (100) herum angeordnet sind.

## Beschreibung

Die Offenbarung betrifft ein Elektrolysesystem.

Ein Elektrolysesystem, auch als Elektrolyseur bezeichnet, wie beispielsweise ein Hochtemperatur-Wasserdampf-Elektrolyseur (SOEC), wird beispielsweise mit Wasserdampf betrieben, der mit Hilfe von Elektroenergie in Wasserdampf und Sauerstoff zerlegt wird.

Es ist wünschenswert, ein Elektrolysesystem anzugeben, das einen verlässlichen Betrieb ermöglicht.

Ausführungsformen der Offenbarung betreffen ein Elektrolysesystem, insbesondere ein Hochtemperatur-Wasserdampf-Elektrolysesystem.

Das Elektrolysesystem weist einen Träger auf. Der Träger dient beispielsweise zum Tragen einer Elektrolysezellenanordnung, insbesondere zum Tragen einer Mehrzahl von Elektrolysezellenanordnungen. Der Träger weist einen Mittenbereich auf. Der Träger weist einen Randbereich auf. Der Randbereich umgibt den Mittenbereich. Beispielsweise weist der Träger an der Koppelseite eine Scheibenform auf. Beispielsweise umgibt der Randbereich den Mittenbereich konzentrisch. Beispielsweise weist der Mittenbereich eine Kreisform auf. Der Randbereich weist beispielsweise eine Ringform auf.

Das Elektrolysesystem weist eine Mehrzahl von Elektrolysezellenanordnungen auf. Die Elektrolysezellenanordnungen sind jeweils in dem Randbereich angeordnet. Die Elektrolysezellenanordnungen sind jeweils ausgebildet, aus einem Prozessfluid, beispielsweise Wasserdampf, mit Hilfe von elektrischer Energie, Sauerstoff und Wasserstoff zu erzeugen.

Das Elektrolysesystem weist eine Heizanordnung auf. Die Heizanordnung ist in dem Mittenbereich angeordnet. Die Heizanordnung ist so angeordnet, dass die Elektrolysezellenanordnungen um die Heizanordnung herum angeordnet sind. Die Heizanordnung ist mittig angeordnet und von den Elektrolysezellenanordnungen umgeben. Die Elektrolysezellenanordnungen sind in dem Randbereich angeordnet, beispielsweise in einer Ringform und umgeben die Heizanordnung, die im Zentrum der Elektrolysezellenanordnungen angeordnet ist.

Die Heizanordnung ist angeordnet und ausgebildet, um die Elektrolysezellenanordnungen zu erwärmen. Heizenergie der Heizanordnung ist auf die Elektrolysezellenanordnungen übertragbar, um diese zu erhitzen. Beispielsweise ist die Heizanordnung ausgebildet, die Elektrolysezellenanordnungen auf Temperaturen von bis zu 200 °C oder mehr, insbesondere auf Temperaturen von bis zu 850 °C oder mehr zu erhitzen. Die Heizanordnung ist als eine zentrale Heizanordnung ausgebildet, die die Mehrzahl von Elektrolysezellenanordnungen heizen kann. Die Heizenergie wird von innen, von dem Mittenbereich, nach außen, in den Randbereich, übertragen, um mittels der Heizanordnung die Elektrolysezellenanordnungen zu heizen. Insbesondere ist die Heizanordnung ausgebildet, ein symmetrisches Temperaturfeld zu erzeugen. Die Heizenergie der Heizanordnung trifft gleichmäßig auf die Elektrolysezellenanordnungen, so dass eine homogene Erwärmung der Elektrolysezellenanordnungen, insbesondere der Seiten der Elektrolysezellenanordnungen, die der Heizanordnung zugewandt sind, möglich ist.

Gemäß einer Ausführungsform weist die Heizanordnung eine erste Heizvorrichtung auf. Die erste Heizvorrichtung ist ausgebildet zum Heizen des Prozessfluids für die Elektrolysezellenanordnungen. Beispielsweise weist die erste Heizvorrichtung einen konvektiven Fluidvorheizer auf, insbesondere einen konvektiven Gasvorheizer, um das Prozessgas, beispielsweise Wasserdampf, zu erwärmen. Beispielsweise strömt im Betrieb das gasförmige Prozessfluid durch die erste Heizvorrichtung und wird dabei erwärmt. Insbesondere wird das Prozessgas zentral in der ersten Heizvorrichtung erwärmt, bevor es in die einzelnen Elektrolysezellenanordnungen eingeführt wird. Die erste Heizvorrichtung weist beispielsweise eine elektrische Heizung auf, insbesondere eine elektrische Widerstandsheizung.

Gemäß Ausführungsformen weist die Heizanordnung eine zweite Heizvorrichtung auf. Die zweite Heizvorrichtung ist ausgebildet zum Heizen der Elektrolysezellenanordnungen. Heizenergie der zweiten Heizvorrichtung ist mittels Strahlung und Konvektion auf die Elektrolysezellenanordnungen übertragbar, um diese zu heizen. Die zweite Heizvorrichtung weist insbesondere einen Strahlungsheizer auf. Insbesondere weist die zweite Heizvorrichtung eine elektrische Heizung auf, insbesondere eine elektrische Widerstandsheizung. Beispielsweise ist die zweite Heizvorrichtung mittig zwischen den Elektrolysezellenanordnungen angeordnet und strahlt die Heizenergie radial ab, so dass alle Elektrolysezellenanordnungen mittels der zweiten Heizvorrichtung beheizbar sind.

Gemäß Ausführungsformen weist die zweite Heizvorrichtung einen Strahlungsheizer auf, der in Form eines Hohlzylinders ausgebildet ist. Der Strahlungsheizer erstreckt sich entlang einer ersten Achse zwischen einem ersten Ende und einem zweiten Ende. Die erste Heizvorrichtung ist an dem ersten Ende angeordnet. Elektrische Kontaktstellen der ersten Heizvorrichtung sind an dem zweiten Ende angeordnet. Die Hohlzylinderform des Strahlungsheizers der zweiten Heizvorrichtung ermöglicht ein gleichmäßiges Beheizen der kreisförmig angeordneten Elektrolysezellenanordnungen. Die erste Heizvorrichtung und die elektrischen Kontaktstellen der ersten Heizvorrichtung sind an den gegenüberliegenden Enden der Hohlzylinderform angeordnet. Somit sind die elektrischen Anschlüsse für die erste Heizvorrichtung an dem zweiten Ende möglich, insbesondere in einem Bereich, in dem im Betrieb vergleichsweise niedrige Temperaturen vorherrschen, insbesondere Temperaturen von weniger als 200 °C, beispielsweise Temperaturen von weniger als 150 °C oder weniger als 100 °C.

Gemäß Ausführungsformen weist das Elektrolysesystem ein Hohlzylinderrohr auf. Das Hohlzylinderrohr erstreckt sich entlang der ersten Achse zwischen einem ersten Rohrende und einem zweiten Rohrende. Die zweite Heizvorrichtung umgibt das Hohlzylinderrohr koaxial. Die zweite Heizvorrichtung, insbesondere der Strahlungsheizer der zweiten Heizvorrichtung, ist an einer Außenseite des Hohlzylinderrohrs angeordnet. Die Elektrolysezellenanordnungen sind kreisförmig um das Hohlzylinderrohr angeordnet.

Gemäß Ausführungsformen weist die erste Heizvorrichtung einen konvektiven Heizer auf. Der konvektive Heizer ist beispielsweise vollständig außerhalb des Hohlzylinderrohrs angeordnet. Es ist auch möglich, dass die erste Heizvorrichtung, beispielsweise der konvektive Heizer der ersten Heizvorrichtung, teilweise innerhalb des Hohlzylinderrohrs angeordnet ist. Beispielsweise ist das Hohlzylinderrohr auf dem Träger aufgesetzt und der konvektive Heizer der ersten Heizvorrichtung ist innerhalb des Trägers angeordnet.

Gemäß Ausführungsformen ist eine Schweißverbindung vorgesehen, die das Hohlzylinderrohr und den Träger miteinander verbindet. Somit ist eine stabile und fluiddichte Verbindung zwischen dem Hohlzylinderrohr und dem Träger ausgebildet.

Gemäß Ausführungsformen ist der Strahlungsheizer mittels Schraubverbindungen an dem Hohlzylinderrohr befestigbar. Beispielsweise weist der Strahlungsheizer Keramiken auf, auf denen die Heizdrähte vorgesehen sind. Die Keramiken mit den Heizdrähten sind mittels der Schraubverbindungen an dem Hohlzylinderrohr befestigt.

Gemäß Ausführungsformen weist der konvektive Heizer der ersten Heizvorrichtung radial zu der ersten Achse eine Ausdehnung auf. Das Hohlzylinderrohr weist radial zu der ersten Achse einen inneren Querschnitt auf. Die Ausdehnung ist kleiner als der innere Querschnitt. Beispielsweise weist der konvektive Heizer radial zu der ersten Achse einen ersten Durchmesser auf. Das Hohlzylinderrohr weist radial zu der ersten Achse einen inneren Durchmesser auf. Der erste Durchmesser ist kleiner als der Innendurchmesser. Somit ist es möglich, den konvektiven Heizer der ersten Heizvorrichtung durch das Hohlzylinderrohr hindurch zu führen, beispielsweise zur Montage, zur Wartung und/oder zum Austausch. Die Schweißverbindung zwischen dem Hohlzylinderrohr und dem Träger muss somit nicht gelöst werden, um den konvektiven Heizer der ersten Heizvorrichtung zum zweiten Ende beziehungsweise zum zweiten Rohrende zu führen. Andersrum ist es möglich, den konvektiven Heizer von dem zweiten Rohrende in Richtung des ersten Rohrendes im Inneren des Hohlzylinderrohrs zu führen, um den konvektiven Heizer an seine Betriebsposition am Träger zu bringen.

Gemäß Ausführungsformen weist das Elektrolysesystem eine Druckfeder auf. Die Druckfeder ist ausgebildet, die erste Heizvorrichtung und die zweite Heizvorrichtung gegen den Träger des Elektrolysesystems zu drücken. Insbesondere ist die Druckfeder an dem zweiten Ende, beispielsweise an dem zweiten Rohrende, vorgesehen, das dem Träger abgewandt angeordnet ist. Beispielsweise ist es möglich, auf die Schweißverbindung zwischen dem Hohlzylinderrohr und dem Träger zu verzichten, wenn die Druckfeder vorgesehen ist. Die Druckfeder weist eine ausreichend starke Kraft auf, um eine ausreichend stabile und fluiddichte Verbindung zu erzeugen. Es ist auch möglich, dass sowohl die Schweißverbindung als auch die Druckfeder vorgesehen sind.

Gemäß Ausführungsformen sind die erste Heizvorrichtung und die zweite Heizvorrichtung starr miteinander fixiert. Dies ist beispielsweise vorgesehen, wenn keine Schweißverbindung sondern die Druckfeder vorgesehen ist, um die erste Heizvorrichtung und die zweite Heizvorrichtung gegen den Träger zu drücken. Die erste Heizvorrichtung und die zweite Heizvorrichtung sind als gemeinsames Bauteil an dem Träger anordenbar und mittels der Druckfeder im Betrieb gegen den Träger drückbar.

Gemäß Ausführungsformen weist das Elektrolysesystem einen Rahmen auf. Der Rahmen umgibt die Elektrolysezellenanordnungen und die Heizanordnung zumindest teilweise. Die Druckfeder ist zwischen dem Rahmen und der Heizanordnung eingespannt. Die Druckfeder drückt somit die Heizanordnung in Richtung hin zu dem Träger. Der Rahmen ist insbesondere an einer dem Träger abgewandten Seite der Heizanordnung vorgesehen, insbesondere also an dem zweiten Ende beziehungsweise dem zweiten Rohrende. Die Druckfeder ist somit axial zur ersten Achse zwischen dem Rahmen und der Heizanordnung anordenbar, um die Federkraft axial entlang der ersten Achse auf die Heizanordnung auszuwirken.

Gemäß Ausführungsformen weist der Träger eine Zuleitung auf. Die Zuleitung ist ausgebildet zum Einleiten des Prozessfluids. Der Träger weist eine Verteilleitung auf zum Zuführen des Prozessfluids zu den Elektrolysezellenanordnungen. Die erste Heizvorrichtung ist in Strömungsrichtung des Prozessfluids zwischen der Zuleitung und der Verteilleitung angeordnet. Prozessfluid wird im Betrieb zunächst in die Zuleitung des Trägers eingebracht. Aus der Zuleitung strömt das Prozessfluid durch die erste Heizvorrichtung und wird dort erwärmt. Danach strömt das Prozessfluid in die Verteilleitung. Die Verteilleitung ist vorgesehen, um das Prozessfluid im Träger zu verteilen und zu allen Elektrolysezellenanordnungen zu führen. Aus der Verteilleitung strömt das Prozessfluid im Betrieb in die Elektrolysezellenanordnungen. Die erste Heizvorrichtung ist somit im Träger vorgesehen, um das Prozessfluid zu erwärmen, bevor es in die Elektrolysezellenanordnungen strömt.

Gemäß Ausführungsformen ist ein erster Abschnitt der Heizanordnung innerhalb des Trägers angeordnet. Ein zweiter Abschnitt der Heizanordnung ist außerhalb des Trägers angeordnet. Beispielsweise ist der konvektive Heizer der ersten Heizvorrichtung in dem Träger angeordnet. Die zweite Heizvorrichtung und die elektrischen Kontaktstellen der ersten Heizvorrichtung sind außerhalb des Trägers angeordnet. Es ist auch möglich, dass ein Teil der ersten Heizvorrichtung, beispielsweise eine Gehäuseplatte oder ähnliches außerhalb des Trägers angeordnet ist.

Gemäß Ausführungsformen weist die Heizanordnung einen elektrischen Anschluss auf zum Anschließen einer Energieversorgung für die Heizanordnung. Der Anschluss ist an einem dem Träger abgewandten Ende der Heizanordnung angeordnet. Beispielsweise ist der elektrische Anschluss ein elektrischer Anschluss für die zweite Heizvorrichtung. Beispielsweise sind die elektrischen Kontaktstellen der ersten Heizvorrichtung Teil des elektrischen Anschlusses der Heizanordnung. Es ist möglich, dass die elektrischen Anschlüsse zum Zuführen der elektrischen Energie zu der ersten Heizvorrichtung und zu der zweiten Heizvorrichtung separat ausgebildet sind. Es ist auch möglich, dass die Anschlüsse sowohl für die erste Heizvorrichtung als auch für die zweite Heizvorrichtung als gemeinsame Gruppe angeordnet sind.

Weitere Vorteile, Merkmale und Weiterbildungen ergeben sich aus den nachfolgenden, in Verbindung mit den Figuren erläuterten Beispielen. Gleich, gleichartige und gleichwirkende Elemente können figurenübergreifend mit den gleichen Bezugszeichen versehen sein.

Es zeigen:
Figur 1 eine schematische Darstellung eines Teils eines Elektrolysesystems gemäß einem Ausführungsbeispiel,
Figuren 2 bis 4 jeweils schematische Darstellungen von Schnittansichten eines Elektrolysesystems gemäß Ausführungsbeispielen.

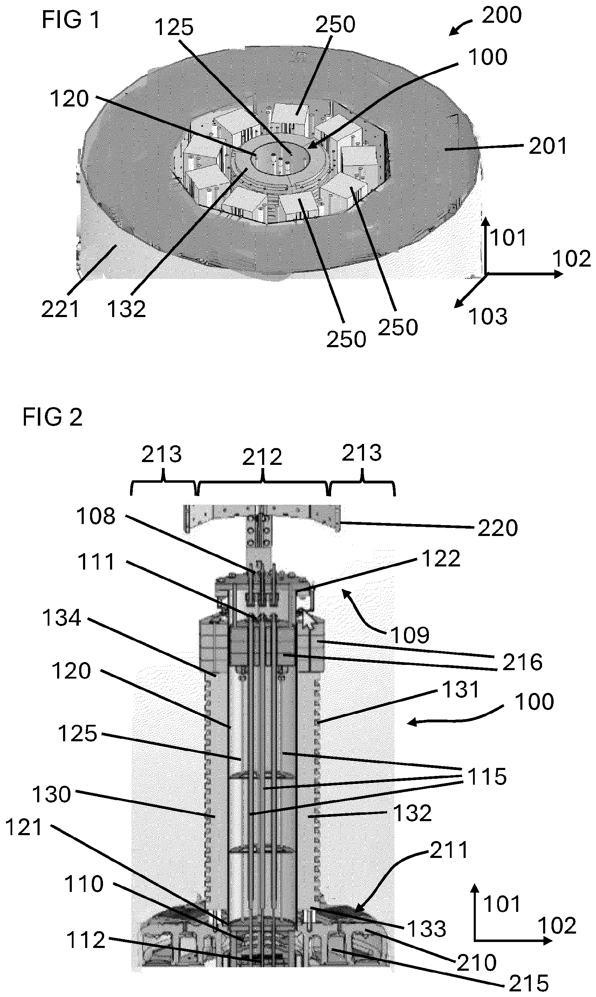

Figur 1 zeigt eine schematische Darstellung eines Elektrolysesystems 200. Das Elektrolysesystem 200 kann auch ein Brennstoffzellensystem sein. Insbesondere ist es möglich, mittels des Elektrolysesystems 200 bei hohen Temperaturen von bis zu 200 °C oder mehr, insbesondere bei Temperaturen von 850 °C, und Wasserdampf sowie elektrischer Energie, Sauerstoff und Wasserstoff zu erzeugen. Alternativ oder zusätzlich ist es möglich, aus Wasserstoff und Luft elektrische Energie zu erzeugen.

Das Elektrolysesystem 200 weist eine Vielzahl von Elektrolysezellenanordnungen 250 auf. Die Elektrolysezellenanordnungen 250 sind auf einem Träger 210 (Figuren 2 bis 4) angeordnet. Die Elektrolysezellenanordnungen sind kreisförmig angeordnet. Im dargestellten Ausführungsbeispiel sind neun Elektrolysezellenanordnungen 250 abgebildet. Es ist auch möglich, dass eine andere Anzahl von Elektrolysezellenanordnungen 250 vorgesehen ist, beispielsweise weniger als neun Elektrolysezellenanordnungen oder mehr als neun Elektrolysezellenanordnungen 250.

In der Mitte der ringförmig angeordneten Elektrolysezellenanordnungen 250 ist eine Heizanordnung 100 angeordnet. Die Heizanordnung 100 ist vorgesehen, um alle oder zumindest einen Großteil der Elektrolysezellenanordnungen 250 des Elektrolysesystems 200 zu beheizen. Die Heizanordnung 100 ist im Zentrum angeordnet. Die Elektrolysezellenanordnungen 250 umgeben die Heizanordnung 100 konzentrisch. Auf einer der Heizanordnung 100 abgewandten Seite ist eine Dämmung 201 vorgesehen. Die Dämmung 201 ist ebenfalls konzentrisch angeordnet. Auf einer den Elektrolysezellenanordnungen 250 abgewandten Seite ist eine Hülle 221 vorgesehen, die das Elektrolysesystem 200 umgibt. Die Elektrolysezellenanordnungen 250 sind somit zwischen der Heizanordnung 100 und der Dämmung 201 angeordnet.

Die Heizanordnung 100 erstreckt sich entlang einer ersten Achse 101 länglich ausgedehnt. Insbesondere ist die Ausdehnung der Heizanordnung 100 entlang der ersten Achse 101 größer als entlang einer zweiten Achse 102 und entlang einer dritten Achse 103. Die erste Achse 101, die zweite Achse 102 und die dritte Achse 103 stehen insbesondere senkrecht aufeinander.

In einer Schnittebene, die die zweite Achse 102 und die dritte Achse 103 aufweist, erstreckt sich die Heizanordnung 100 insbesondere senkrecht zu dieser Ebene entlang der ersten Achse 101. Die Elektrolysezellenanordnungen 250 sind radial zu der Achse 101 um die Heizanordnung 100 herum angeordnet. Die Dämmung 201 umgibt die Elektrolysezellenanordnungen 250.

Im Betrieb herrscht im Bereich der Elektrolysezellenanordnungen 250, also zwischen der Dämmung 201 und der Heizanordnung 100 ein erhöhter Druck, beispielsweise ein Druck von 120000 Pascal. Zudem herrscht die hohe Temperatur. Mittels der Hülle 221 ist eine fluiddichte Anordnung realisiert.

Figuren 2 bis 4 zeigen verschiedene Ausgestaltungen der Heizanordnung 100. Merkmale, die für alle Ausgestaltungen in gleicher Art gelten, werden nicht zwingendermaßen für jede Figur wiederholt.

Der Träger 210 weist eine Koppelseite 211 auf. An der Koppelseite 211 sind die Elektrolysezellenanordnungen 250 anordenbar. Die Elektrolysezellenanordnungen 250 erstrecken sich im montierten Zustand ausgehend von der Koppelseite 211 entlang der ersten Richtung 101 nach oben.

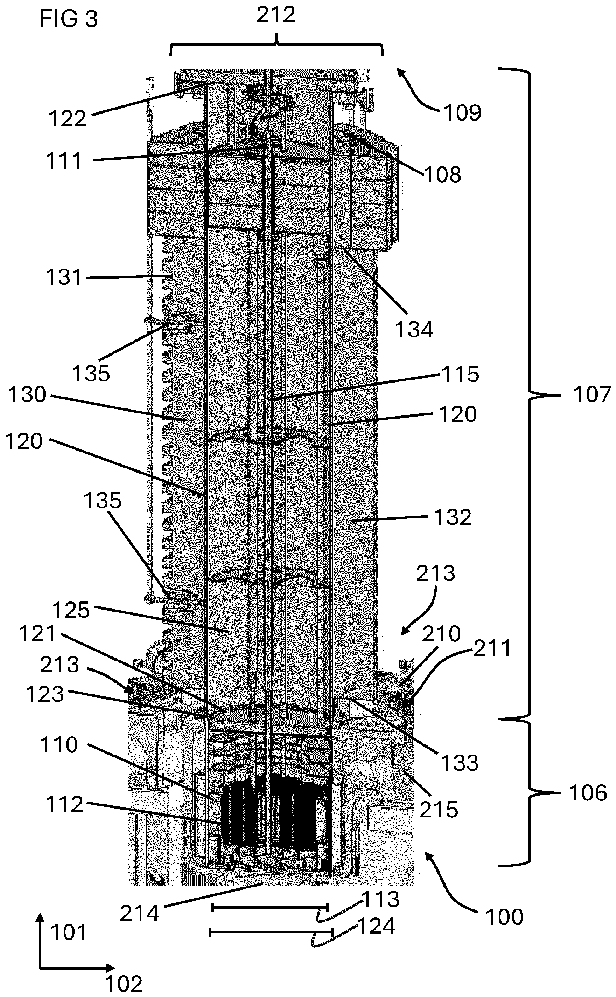

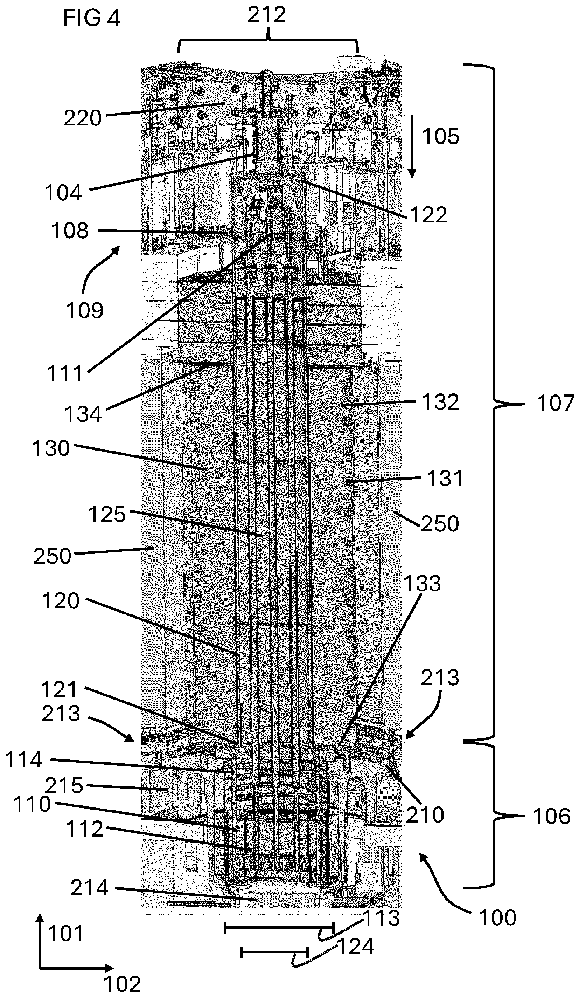

Der Träger 210 umgibt eine Zuleitung 214 (Figuren 3 und 4). Die Zuleitung 214 ist an eine Fluidversorgung angeschlossen. Beispielsweise wird mittels der Zuleitung 214 das Prozessfluid, insbesondere Wasserdampf, zu dem Elektrolysesystem 200 zugeführt.

Der Träger 210 umgibt eine Verteilleitung 215. Die Verteilleitung 215 ist vorgesehen, um das Prozessfluid zu den Elektrolysezellenanordnungen 250 zu führen. Insbesondere ist die Verteilleitung 215 ringförmig angeordnet und in fluidem Kontakt mit den Elektrolysezellenanordnungen 250. Im Betrieb strömt das Prozessfluid zunächst durch die Zuleitung 214, nachfolgend durch die Verteilleitung 215 und aus der Verteilleitung 215 in die Elektrolysezellenanordnungen 250 und durch diese hindurch.

Der Träger 210 weist einen Mittenbereich 212 auf. Der Mittenbereich 212 umfasst insbesondere das Zentrum des Trägers 210 in der Ebene, die von der zweiten Achse 102 und der dritten Achse 103 aufgespannt wird. Insbesondere umfasst der Mittenbereich 212 das Zentrum der Koppelseite 211.

Der Träger 210 weist einen Randbereich 213 auf. Der Randbereich 213 umgibt den Mittenbereich 212 ringförmig. Der Randbereich 213 umgibt den Mittenbereich 212 konzentrisch. Die Elektrolysezellenanordnungen 250 sind in dem Randbereich 213 anordenbar. Im Betrieb sind die Elektrolysezellenanordnungen 250 in dem Randbereich 213 angeordnet, konzentrisch zu dem Mittenbereich 212.

Die Heizanordnung 100 ist in dem Mittenbereich 212 anordenbar. Im betriebsfertigen Zustand ist die Heizanordnung 100 in dem Mittenbereich 212 angeordnet und konzentrisch von den Elektrolysezellenanordnungen 250 umgeben. Die Heizanordnung 100 erstreckt sich länglich ausgedehnt entlang der ersten Achse 101, die beispielsweise eine zentrale Achse des Elektrolysesystems 200 darstellt.

Die Heizanordnung 100 weist eine erste Heizvorrichtung 110 auf. Die erste Heizvorrichtung 110 ist insbesondere zentral im Träger 210 angeordnet. Die erste Heizvorrichtung 110 ist in Strömungsrichtung des Prozessfluids zwischen der Zuleitung 214 und der Verteilleitung 215 angeordnet. Das Prozessfluid, das von der Zuleitung 214 in die Verteilleitung 215 strömt, durchströmt dabei die erste Heizvorrichtung 110. Die erste Heizvorrichtung 110 ist vorgesehen und ausgebildet zum Erwärmen und Aufheizen des Prozessfluids bevor es in die Verteilleitung 215 gelangt.

Die erste Heizvorrichtung 110 weist einen konvektiven Heizer 112 auf, der mittels elektrischer Energie das Prozessfluid beim Vorbeiströmen erwärmt. Der konvektive Heizer 112 kann auch als Gasvorheizer bezeichnet werden. Insbesondere ist der konvektive Heizer 112 ausgebildet, das Prozessfluid so aufzuheizen, dass es mit einer vorgegebenen Solltemperatur in die Verteilleitung 215 einströmt. Diese Temperatur entspricht beispielsweise einer vorgegebenen Solleingangstemperatur für die Elektrolysezellenanordnungen 250.

Die Heizanordnung 100 weist eine zweite Heizvorrichtung 130 auf. Die zweite Heizvorrichtung 130 weist einen Strahlungsheizer 131 auf. Der Strahlungsheizer 131 ist ausgebildet Heizenergie auf die Elektrolysezellenanordnungen 250 zu strahlen, um diese zu erwärmen. Insbesondere ist es mittels des Strahlungsheizers 131 möglich, die dem Strahlungsheizer 131 zugewandten Seiten der Elektrolysezellenanordnungen 250 zu erwärmen, auf denen das Prozessgas einlassseitig strömt. Der Strahlungsheizer 131 übergibt Wärme in Form von Strahlung auf die Elektrolysezellenanordnungen 250. Beispielsweise ist dieser Wärmeeintrag nutzbringend für Aufheizvorgänge und/oder Standby-Vorgänge. In diesen Betriebsmodi sind keine signifikanten Ströme des Prozessfluids in den Elektrolysezellenanordnungen 250 vorhanden. Die Elektrolysezellenanordnungen 250 werden somit nicht von dem Prozessfluid auf einer gewünschten Temperatur gehalten. Mittels des Strahlungsheizers 131 ist es möglich, die Elektrolysezellenanordnungen 250 dennoch auf eine gewünschte Temperatur zu heizen und diese Temperatur zu halten.

Die Heizanordnung 100 weist ein Hohlzylinderrohr 120 auf. Das Hohlzylinderrohr ist insbesondere ein Metallrohr, das sich länglich ausgedehnt entlang der ersten Achse 101 erstreckt. Das Hohlzylinderrohr 120 erstreckt sich entlang der ersten Achse 101 zwischen einem ersten Rohrende 121 und einem zweiten Rohrende 122. Das Hohlzylinderrohr 120 umgibt einen Innenraum 125. Eine dem Innenraum 125 zugewandte Innenseite des Hohlzylinderrohrs 120 weist einen inneren Querschnitt 124 entlang der zweiten Achse 102 auf.

Das Hohlzylinderrohr 120 ist an dem ersten Rohrende 121 mit dem Träger 210 gekoppelt. Das zweite Rohrende 122 ist von dem Träger 210 abgewandt angeordnet.

Die erste Heizanordnung 100, insbesondere der konvektive Heizer 112 sind an dem ersten Rohrende 121 angeordnet. Die zweite Heizvorrichtung 130, insbesondere der Strahlungsheizer 131, umgibt das Hohlzylinderrohr 120 konzentrisch zumindest teilweise zwischen dem ersten Rohrende 121 und dem zweiten Rohrende 122.

Ein elektrischer Anschluss 108 der Heizanordnung 100 ist beispielsweise an dem zweiten Rohrende 122 vorgesehen. Insbesondere sind elektrische Kontaktstellen 111 der ersten Heizvorrichtung 110 an dem zweiten Rohrende 122 angeordnet. Die Anschlüsse für die elektrische Energie für den konvektiven Heizer 112 sind an dem zweiten Rohrende 122 angeordnet. Im Innenraum 125 des Hohlzylinderrohrs 120 sind elektrische Leitungen 115 angeordnet, die die elektrischen Kontaktstellen 111 mit dem konvektiven Heizer 112 elektrisch verbinden. Somit ist es möglich, die elektrischen Kontaktstellen 111 der ersten Heizvorrichtung 110 in einem kälteren Bereich anzuordnen.

Entlang der ersten Achse 101 sind zwischen dem konvektiven Heizer 112 und dem Strahlungsheizer 131 thermische Isolierungen 216 angeordnet, um sowohl die erforderlichen hohen Temperaturen im Bereich der Elektrolysezellenanordnungen 250 zu ermöglichen als auch die deutlich geringeren Temperaturen im Bereich des elektrischen Anschlusses 108 und/oder der elektrischen Kontaktstellen 111. Der elektrische Anschluss 108 ist so ausgebildet, dass die zwei separat zueinander ausgebildeten Heizvorrichtungen 110, 130 separat ansteuerbar und betreibbar sind. Elektrische Spannungen sind unabhängig voneinander an die erste Heizvorrichtung 110 und an die zweite Heizvorrichtung 120 anlegbar.

Die zweite Heizvorrichtung 130, insbesondere der Strahlungsheizer 131, umgibt das Hohlzylinderrohr 120 als Hohlzylinder 132. Das Hohlzylinderrohr 120 und der hohlzylinderförmige Strahlungsheizer 131 sind konzentrisch zueinander angeordnet. Der Hohlzylinder 132 des Strahlungsheizers 131 erstreckt sind länglich ausgedehnt entlang der ersten Achse 101 zwischen einem ersten Ende 133 und einem zweiten Ende 134. Das erste Ende 133 ist dem Träger 210 zugewandt. Das zweite Ende 134 ist dem Träger 210 abgewandt. Insbesondere ist das erste Ende 133 des Hohlzylinders 132 dem ersten Rohrende 121 des Hohlzylinderrohrs 120 zugewandt. Das zweite Ende 134 des Hohlzylinders 132 ist dem zweiten Rohrende 122 des Hohlzylinderrohrs 120 zugewandt.

Der Strahlungsheizer 131, insbesondere der Hohlzylinder 132, ist in einem zweiten Abschnitt 107 der Heizanordnung 100 angeordnet. Der zweite Abschnitt 107 ist außerhalb des Trägers 210 angeordnet. Ein erster Abschnitt 106 der Heizanordnung ist innerhalb des Trägers 210 angeordnet. Beispielsweise ist der konvektive Heizer 112 der ersten Heizvorrichtung 110 in dem ersten Abschnitt 106 angeordnet. Der Strahlungsheizer 131 der zweiten Heizvorrichtung 130 ist in dem zweiten Abschnitt 107 außerhalb des Trägers 210 angeordnet. Beispielsweise erstreckt sich der zweite Abschnitt 107 entlang der erste Achse 101 zwischen der Koppelseite 211 und dem zweiten Rohrende 122.

Gemäß dem Ausführungsbeispiel der Figur 3 ist das Hohlzylinderrohr 120 an dem ersten Rohrende 121 mittels einer Schweißverbindung 123 starr an dem Träger 210 fixiert. Das Hohlzylinderrohr 120 und der Träger 210 sind mechanisch stabil miteinander verbunden.

Der Strahlungsheizer 131 ist mittels einer Schraubverbindung 135 mit dem Hohlzylinderrohr 120 verbunden. Aufgrund der stabilen mechanischen Verbindung zwischen dem Hohlzylinderrohr 120 und dem Träger 210 ist es möglich, den Strahlungsheizer 131, beispielsweise den Hohlzylinder 132 mittels der Schraubverbindung 135 direkt an dem Hohlzylinderrohr 120 zu befestigen.

Die erste Heizvorrichtung 110, insbesondere der konvektive Heizer 112 weist eine erste Ausdehnung 113 entlang der zweiten Richtung 102 auf. Im Falle eines runden Schnitts entspricht die Ausdehnung 113 einem Durchmesser des konvektiven Heizers 112 entlang der zweiten Richtung 102. Die Ausdehnung 113 ist geringer als der innere Querschnitt 124 des Hohlzylinderrohrs 120. Somit ist es möglich, zur Montage und/oder zur Wartung und/oder zum Austausch den konvektiven Heizer 112 entlang der ersten Achse 101 durch das Hohlzylinderrohr 120 zu führen, insbesondere zwischen dem ersten Rohrende 121 und dem zweiten Rohrende 122.

Figur 4 zeigt eine alternative Befestigung der Heizanordnung 100 an dem Träger 210. Insbesondere wird auf die Schweißverbindung 123 verzichtet. Die Heizanordnung 100 weist eine Druckfeder 104 auf. Die Druckfeder 104 ist an dem zweiten Rohrende 122 zwischen dem Hohlzylinderrohr 120 und einem Rahmen 220 der Heizanordnung 100 eingespannt. Der Rahmen 220 umgibt insbesondere die Elektrolysezellenanordnungen 250, insbesondere auch die Dämmung 201 und ist beispielsweise starr mit dem Träger 210 gekoppelt. Auf einer dem Träger 210 abgewandten Seite erstreckt sich der Rahmen 220 zumindest abschnittsweise entlang der zweiten Richtung 102. In diesem Bereich ist die Heizanordnung 100 mittels der Druckfeder 104 an dem Rahmen 220 abgestützt.

Die Druckfeder 104 ist so angeordnet, dass sie eine Federkraft entlang einer Richtung 105 entlang der ersten Achse 101 auswirkt, die die Heizanordnung 100, insbesondere das Hohlzylinderrohr 120 gegen den Träger 210 drückt. Mittels der Federkraft der Feder 104 wird das Hohlzylinderrohr 120 an dem ersten Rohrende 121 gegen die Koppelseite 211 des Trägers 210 gedrückt.

Mittels der Federkraft der Feder 104 wird insbesondere die zweite Heizvorrichtung 130 gegen die Koppelseite 211 des Trägers 210 gedrückt. Mittels der Federkraft der Feder 104 wird insbesondere der Hohlzylinder 132 gegen die Koppelseite 211 des Trägers 210 gedrückt.

Die erste Heizvorrichtung 110, insbesondere der konvektive Heizer 112 ist mittels einer mechanischen Verbindung 114 mit der zweiten Heizvorrichtung 130 und/oder mit dem Hohlzylinderrohr 120 mechanisch starr verbunden. Die erste Heizvorrichtung 110 und die zweite Heizvorrichtung 130 sowie das Hohlzylinderrohr 120 bilden somit eine gemeinsame Einheit, die gemeinsam an dem Träger 210 montierbar ist und gemeinsam von dem Träger 210 demontierbar ist. Beispielsweise ist in diesem Fall die Ausdehnung 113 des konvektiven Heizers 112 größer als der innere Querschnitt 124 des Hohlzylinderrohrs 120.

Die Heizanordnung 100 gemäß den verschiedenen Ausgestaltungen ermöglicht ein gleichmäßiges Heizen des Prozessfluids und der Elektrolysezellenanordnungen 250 sowohl während des Betriebs zum Erzeugen von Wasserstoff als auch während Aufheizphasen und/oder Standby-Phasen. Die kreisrunde Anordnung der Elektrolysezellenanordnungen 250 zwischen der zweiten Heizvorrichtung 130 und der Dämmung 201 ermöglicht die zentrale Anordnung der Heizanordnung 100. Die Aufteilung der Heizanordnung 100 in die zwei separat betreibbaren Heizvorrichtung 110, 120 ermöglichen die unterschiedlichen Heizarten zum einen für das Prozessfluid und zum anderen für die Elektrolysezellenanordnungen 250. Im Wartungsfall ist es möglich, einzelne Komponenten auszutauschen, insbesondere ohne das komplette Elektrolysesystem 200 und/oder die komplette Heizanordnung 100 auseinanderzubauen. Somit können aufwendige Wartungsarbeiten beispielsweise an hochtemperaturbelasteten Leitungen vermieden werden. Beispielsweise ist es somit möglich, zusätzliche Schweißarbeiten oder ähnliches zu vermeiden.

Der konvektive Heizer 112 ist beispielsweise in das senkrecht stehende Hohlzylinderrohr 120 einführbar, so dass der konvektive Heizer 112 in dem Träger 210 angeordnet werden kann und trotzdem die elektrischen Kontaktstellen 111 der ersten Heizvorrichtung 110 an dem zweiten Rohrende 122 in einer vergleichsweise kalten Zone liegen. Der im Betrieb heiße Heizkern des konvektiven Heizers 112 wird tief in die Gasleitungen in dem Träge 210 angeordnet. Die Verteilleitung 215 ist in dem Träger beispielsweise kreisrund angeordnet, so dass eine gleichmäßige Verteilung des erhitzten Prozessfluids auf alle Elektrolysezellenanordnungen 250 möglich ist.

Die zentrale Anordnung der Heizanordnung 100 und die kreisrunden Formen des konvektiven Heizers 112 zum Vorheizen des Prozessfluids und des Strahlungsheizers 131 zum Beheizen der Elektrolysezellenanordnungen 250 wird ein symmetrisches Temperaturfeld ermöglicht. Die Heizstrahlung des Strahlungsheizers 131 trifft gleichmäßig auf die Innenseite aller Elektrolysezellenanordnungen 250, so dass eine homogene Erwärmung der Elektrolysezellenanordnungen 250 möglich ist.

### Bezugszeichen

- 100: Heizanordnung
- 101: erste Achse
- 102: zweite Achse
- 103: dritte Achse
- 104: Druckfeder
- 105: Richtung der Federkraft
- 106: erster Abschnitt
- 107: zweiter Abschnitt
- 108: elektrischer Anschluss
- 109: abgewandtes Ende
- 110: erste Heizvorrichtung
- 111: elektrische Kontaktstellen
- 112: konvektiver Heizer
- 113: Ausdehnung
- 114: mechanische Verbindung mit der zweiten Heizvorrichtung
- 115: elektrische Leitungen
- 120: Hohlzylinderrohr
- 121: erstes Rohrende
- 122: zweites Rohrende
- 123: Schweißverbindung
- 124: innerer Querschnitt
- 125: Innenraum
- 130: zweite Heizvorrichtung
- 131: Strahlungsheizer
- 132: Hohlzylinder
- 133: erstes Ende
- 134: zweites Ende
- 135: Schraubverbindung
- 200: Elektrolysesystem
- 201: Dämmung
- 210: Träger
- 211: Koppelseite
- 212: Mittenbereich
- 213: Randbereich
- 214: Zuleitung
- 215: Verteileitung
- 216: Thermische Isolierung
- 220: Rahmen
- 221: Hülle
- 250: Elektrolysezellenanordnung

## Patentansprüche

1. Elektrolysesystem (200), aufweisend:
- einen Träger (210), der an einer Koppelseite (211) einen Mittenbereich (212) und einen Randbereich (213) aufweist, der den Mittenbereich (212) umgibt,
- eine Mehrzahl von Elektrolysezellenanordnungen (250), die in dem Randbereich (213) angeordnet sind,
- eine Heizanordnung (100), wobei die Heizanordnung (100) in dem Mittenbereich (212) angeordnet ist, sodass die Elektrolysezellenanordnungen (250) um die Heizanordnung (100) herum angeordnet sind.

2. Elektrolysesystem nach dem vorhergehenden Anspruch, bei dem die Heizanordnung (100) eine erste Heizvorrichtung (110) aufweist, wobei die erste Heizvorrichtung (110) ausgebildet ist zum Heizen eines Prozessfluids für die Elektrolysezellenanordnungen (250).

3. Elektrolysesystem nach einem der vorhergehenden Ansprüche, bei dem die Heizanordnung (100) eine zweite Heizvorrichtung (130) aufweist, wobei die zweite Heizvorrichtung (130) ausgebildet ist zum Heizen der Elektrolysezellenanordnungen (250).

4. Elektrolysesystem nach Ansprüchen 2 und 3, wobei die zweite Heizvorrichtung (130) einen Strahlungsheizer (131) aufweist, der in Form eines Hohlzylinders (132) ausgebildet ist und sich entlang einer ersten Achse (101) zwischen einem ersten Ende (133) und einem zweiten Ende (134) erstreckt, wobei die erste Heizvorrichtung (110) an dem ersten Ende (133) angeordnet ist, und elektrische Kontaktstellen (111) der ersten Heizvorrichtung (110) an dem zweiten Ende (134) angeordnet sind.

5. Elektrolysesystem nach dem vorhergehenden Anspruch, aufweisend ein Hohlzylinderrohr (120), das sich entlang der ersten Achse (101) zwischen einem ersten Rohrende (121) und einem zweiten Rohrende (122) erstreckt, wobei die zweite Heizvorrichtung (130) das Hohlzylinderrohr (120) koaxial umgibt.

6. Elektrolysesystem nach dem vorhergehenden Anspruch, bei dem die erste Heizvorrichtung (110) einen konvektiven Heizer (112) aufweist, wobei der konvektive Heizer (112) vollständig außerhalb des Hohlzylinderrohrs (112) anordenbar ist.

7. Elektrolysesystem nach Anspruch 5 oder 6, aufweisend eine Schweißverbindung (123), die das Hohlzylinderrohr (120) und den Träger (210) miteinander verbindet.

8. Elektrolysesystem nach Anspruch 7, bei dem der Strahlungsheizer (131) mittels einer Schraubverbindung (135) an dem Hohlzylinderrohr (120) befestigbar ist.

9. Elektrolysesystem nach Anspruch 6 und Anspruch 7 oder 8, wobei der konvektive Heizer (112) radial zu der ersten Achse (101) eine Ausdehnung (113) aufweist und das Hohlzylinderrohr (120) radial zu der ersten Achse (101) einen inneren Querschnitt (124) aufweist, wobei die Ausdehnung (113) kleiner ist als der innere Querschnitt (114).

10. Elektrolysesystem nach Anspruch 4 bis 6, aufweisend eine Druckfeder (104), die ausgebildet ist, die erste Heizvorrichtung (110) und die zweite Heizvorrichtung (130) gegen den Träger (210) des Elektrolysesystems (200) zu drücken.

11. Elektrolysesystem nach Anspruch 10, wobei die erste Heizvorrichtung (110) und die zweite Heizvorrichtung (130) starr miteinander fixiert sind.

12. Elektrolysesystem nach Anspruch 10 der 11, aufweisend einen Rahmen (220), der die Elektrolysezellenanordnungen (250) und die Heizanordnung (100) umgibt, wobei die Druckfeder (104) zwischen dem Rahmen (220) und der Heizanordnung (100) eingespannt ist, um die Heizanordnung (100) in Richtung (105) hin zu dem Träger (210) zu drücken.

13. Elektrolysesystem nach einem der Ansprüche 2 bis 12, bei dem der Träger (210) eine Zuleitung (214) zum Einleiten des Prozessfluids umgibt und eine Verteilleitung (215) zum Zuführen des Prozessfluids zu den Elektrolysezellenanordnungen (250) umgibt, wobei die erste Heizvorrichtung (110) in Strömungsrichtung des Prozessfluids zwischen der Zuleitung (214) und der Verteilleitung (215) angeordnet ist.

14. Elektrolysesystem nach einem der vorhergehenden Ansprüche, wobei ein erster Abschnitt (106) der Heizanordnung (100) innerhalb des Trägers (210) angeordnet ist und ein zweiter Abschnitt (107) der Heizanordnung (100) außerhalb des Trägers (210) angeordnet ist.

15. Elektrolysesystem nach einem der vorhergehenden Ansprüche, bei dem die Heizanordnung (100) einen elektrischen Anschluss (108) aufweist zum Anschließen einer Energieversorgung für die Heizanordnung (100), wobei der Anschluss (108) an einem dem Träger (210) abgewandten Ende (109) der Heizanordnung (100) angeordnet sind.
